# EUROPEAN PATENT SPECIFICATION

(11) **EP 1 778 449 B1**
(45) Date of publication and mention of the grant of the patent: **08.09.2010**
(21) Application number: 05776544.8
(22) Date of filing: 20.07.2005
(51) Int. Cl.: B29C 44/34, B29C 33/36, B29C 44/42

(54) **METHOD AND ROTARY DRUM INSTALLATION FOR VACUUM FOAMING OF REFRIGERATORS**
VERFAHREN UND DREHTROMMELANLAGE ZUM SCHÄUMEN VON KÜHLVORRICHTUNGEN UNTER VAKUUM
PROCEDE ET INSTALLATION A TAMBOUR ROTATIF POUR LE MOUSSAGE SOUS VIDE DE REFRIGERATEURS

(30) Priority: 05.08.2004 IT MI20041610
(43) Date of publication of application: 02.05.2007
(73) Proprietor: Crios, S.P.A., 20081 Abbiategrasso (IT)
(72) Inventor: CORRADI, Piero, I-21047 Saronno (IT); DE ROSSI, Claudio, I-20081 Abbiategrasso (IT)
(74) Representative: Coloberti, Luigi
(86) International application number: PCT/EP2005/007898
(87) International publication number: WO 2006/013002

(56) References cited:
- DE-A1- 19 853 442
- US-A- 4 664 614
- US-A- 5 827 385

## Description

### BACKGROUND OF THE INVENTION

This invention refers to the foaming of refrigerators, freezers and the like, and in particular is directed to a method and an installation for foaming refrigerators, whereby it is possible to cyclically operate under vacuum conditions with two or more foaming jigs, and considerably accelerate the rising step of the foam, to ensure a complete filling or packing of hollow walls of refrigerator cabinets, in a comparatively short length of time.

### STATE OF THE ART

The foaming of refrigerator cabinets is normally carried out by enclosing the cabinet in a foaming jig capable to oppose the strong internal thrusts created by the expansion of the polyurethane foam in the hollow walls of the cabinet.

Usually, a foaming jig comprises a bottom platen for supporting a refrigerator cabinet, four peripheral platens movably supported to be shifted close to and away from corresponding side walls of the cabinet, and a shaped plug to penetrate into a compartment or compartments of the cabinet, to oppose the internal thrusts of the polyurethane foam during expansion.

The thrust plug is usually secured to a supporting structure, while the bottom and peripheral platens of the jig are supported by a movable table to be raised towards the overlying thrust plug.

Conventional foaming jigs for foaming refrigerator cabinets are disclosed for example in IT-A-1 168 059, US-A-4,370,759 and US-A-4,411,413.

The conventional foaming jig installations, in use for many years, have several limits and drawbacks, in particular:
- each foaming jig is substantially fixed and associated with a processing line which requires specific auxiliary equipments. In complex installations, having two or more processing lines, all this involves an enormous waste of space, as well as extremely high investment and management costs, in that each processing line must be served by respective equipments;
- since, after the foaming step, the refrigerator cabinet must remain closed in the jig for a relatively long enough period of time to allow the polymerisation and sufficient curing of the foam, the working cycle requires long times and the productivity of the installation is comparatively low;
- moreover, whenever it is necessary to change the model of cabinet to be foamed, the installation must be shut down for a prolonged period of time necessary for removing and replacing the previous thrust plug with a new one of a different type, and for carrying out the necessary adjustments of the entire foaming jig, with a consequent loss of productivity.

In order to partially obviate these limits and drawbacks in installations which make use of conventional foaming jigs, US-A-4,664,614 suggests the use of a foaming apparatus provided with two or more thrust plugs supported by a rotary drum, selectively positionable towards an underlying foaming jig.

Even though an apparatus of this kind, due to its versatility of use, has permitted a certain improvement, in point of fact part of the problems typical of a conventional foaming installation have remained substantially unsolved.

In fact, since the length of time that the cabinet remains in the foaming jig has remained substantially unchanged, in that it depends upon the reactivity of the chemical system of the polyurethane mixture, it has consequently not been possible to reduce the length of the entire working cycle.

Moreover, a specific processing line must still be dedicated to each individual foaming apparatus, with consequent requirements in terms of space, auxiliary equipments, and higher investment and management costs.

In all the cases, the foaming of refrigerator cabinets takes place at atmospheric pressure, maintaining the jig with the cabinet in a working area open towards the external environment.

It is also known that the foaming of a polyurethane mixture is closely related to the reactivity of the chemical system; therefore the time required for rising of the foam and for filling the walls of a refrigerator cabinet is a conditioning factor in determining the length of the working cycle of a conventional foaming installation.

In order to reduce the cycle times and improve the productivity of these installations, in recent years attempts have been made to find chemical solutions; in particular, new chemical systems for so-called "fast" polyurethane mixtures, having extremely short reaction times, have been developed and tested.

Although the use of highly reactive or fast polyurethane mixtures makes it possible to reduce the cycle times in the foaming of refrigerator cabinets, and in general in the production of moulded articles, in practice this solution also has some drawbacks; in general, it is not very suitable for foaming refrigerator cabinets, or for foaming in moulds of large dimensions, or having a particularly complex design.

In fact, due to the excessive reactivity and polymerising speed of the polyurethane mixture, the latter tends to rapidly increase its viscosity, and then to solidify before the foam has completely filled the walls of the cabinet or the cavity of the mould, resulting in the production of faulty cabinets or moulded articles to be discarded.

For this reason, the chemical solution has proved to be not much suitable in the foaming of refrigerator cabinets, using conventional methods and equipment.

The use of reduced pressure or suction has also been proposed in order to remove gases from a mould; the simple use of reduced pressure, in apparatuses for moulding plastic articles, is described for example in US-A-3,970,732, DE-A-43 27 832 and EP-A-954 025.

While on the one hand the simple reduction of atmospheric pressure, or the simple suction of the air, serves to remove the gases that develop inside a mould, also facilitating a certain distribution of the foam, when accomplished in this way it is not suitable for foaming refrigerator cabinets and freezers for domestic use having a complex design, by means of highly reactive polyurethane mixtures. In fact, creating a relatively reduced vacuum, between the two half shells of the side walls of a refrigerator cabinet, would tend to deform them, causing them to bend inwards; the use of spacers or thrust elements inside the walls of the cabinet, in addition to not completely solving the problem, would further complicate the manufacturing process, involving additional time and costs.

There is consequently a need to reduce the cycle times and increase the productivity of installations for foaming refrigerator cabinets, and at the same time find new technical solutions which allow the use of polyurethane formulations characterised by a high reactivity.

### OBJECTS OF THE INVENTION

The main object of this invention is to provide a method for foaming refrigerator cabinets and the like, capable of improving the manufacturing process and of reducing the cycle times for the entire installation, allowing at the same time a satisfactory foaming and a complete packing of the cabinet walls, in a comparatively short length of time, while maintaining pressure balanced conditions during the foaming.

A further object of the invention is to provide a method and an installation for foaming refrigerator cabinets, whereby use is made of a single foaming station equipped with several foaming jigs interlocked to a single processing line, thereby drastically reducing the space consumption, the number of auxiliary equipments, investment and management costs.

A still further object of the invention is to provide a method for foaming refrigerator cabinets, which is particularly suitable for use with polyurethane mixtures having high reactivity characteristics.

### BRIEF DESCRIPTION OF THE INVENTION

The above can be achieved by a method for foaming refrigerator cabinets according to claim 1, and by an installation according to claim 10.

According to the invention, the aforementioned scopes are achieved by supporting two or more foaming jigs by a rotary drum, and cyclically enclosing each foaming jig with the refrigerator cabinet in vacuum chamber, in which it is possible to generate a pre-established vacuum degree, to accelerate the distribution and rising of the polyurethane foam, until totally filling the cavities of the cabinet walls.

In particular, according to the invention, a method has been provided for vacuum foaming of refrigerator and/or freezer cabinets having hollow walls, within a foaming jig, characterised by the steps of:
providing first and at least second foaming jigs and respective jig-housing bells, on a rotary support drum, to sequentially move each jig and bell from a bottom position along a circular path;
feeding a chemically reactive foaming mixture into hollow walls of a cabinet, in the bottom position of the foaming jig;
closing the housing bell by a bottom cap to perform a vacuum chamber;
generating vacuum conditions within the vacuum chamber and the foaming jig in the bottom position of the circular path; and
sequentially positioning each foaming jig and housing bell in the bottom position to vacuum foam a new cabinet, while moving the foamed cabinets along said circular path.

The best possible foaming conditions and vacuum degree must be found by means of suitable preliminary tests, in relation to the polyurethane formulation used and the type of refrigerator cabinet or article to be foamed; for example, it may be found convenient to work with a vacuum degree ranging from 600 to 900 millibars (6000 ÷ 9000 Pa) and with formulations having a 20÷25% lower degree of polymerisation compared to formulations currently in use, under same conditions for the other process parameters, such as for example the final density of the foam, the thermal conductivity, type and quantity of foaming agent and/or of reaction water.

For the purposes of present invention, the term highly reactive polyurethane mixture is understood to mean a mixture having a gel time equivalent to or less than 40-45 seconds, and a polymerisation time less than 300 seconds, for foam thicknesses equivalent to or more than 80 mm.

According to a further feature of the invention, an installation has been provided for vacuum foaming of hollow walls of refrigerator and/or freezer cabinets into foaming jigs characterised by comprising:
a rotatably supported jig-holder drum;
first and at least second foaming jigs angularly spaced apart on the rotary drum, to move along a circular path;
jig-housing bells secured to the jig-holder drum to enclose respective foaming jigs;
a removable closure cap, to provide a vacuum chamber in the bottom position of each jig-housing bell;
a vertically movable support table beneath the rotary drum, for supporting a cabinet and the closure cap;
first control means being provided for step rotation of the drum, to sequentially dispose each housing bell and a foaming jig with a downwardly facing disposition, above the support table and the closure cap;
second control means to vertically move the support table and the closure cap between a lower and an upper position to open respectively to close the vacuum chamber enclosing a foaming jig; and
control means to selectively connect the vacuum chamber to a vacuum source.

The use of vacuum foaming and a rotary drum installation for supporting several foaming jigs, according to the invention, not only makes it possible to use highly reactive chemical mixtures, but also helps to considerably reduce the length of the work cycle, and to improve rising, distribution and packing of the foam.

### BRIEF DESCRIPTION OF THE DRAWINGS

These and further features of the method and the installation according to the invention, will be more clearly evident from the following description, with reference to the drawings, in which:
Fig. 1 is a side view of a foaming installation according to the invention;
Fig. 2 is an enlarged detail of a wall of a refrigerator cabinet;
Fig. 3 is an enlarged cross-sectional view along the line 3-3 of fig. 1, with the movable support table, in a completely lowered position, in an open condition of the vacuum chamber;
Fig. 4 is a cross section similar to that of the preceding figure, with the movable table in an intermediate position;
Fig. 5 is a cross section similar to that of the preceding figures, with the movable table in a completely raised position in which closes the vacuum chamber;
Fig. 6 is a flow diagram of the method according to the invention.

### DETAILED DESCRIPTION OF THE INVENTION

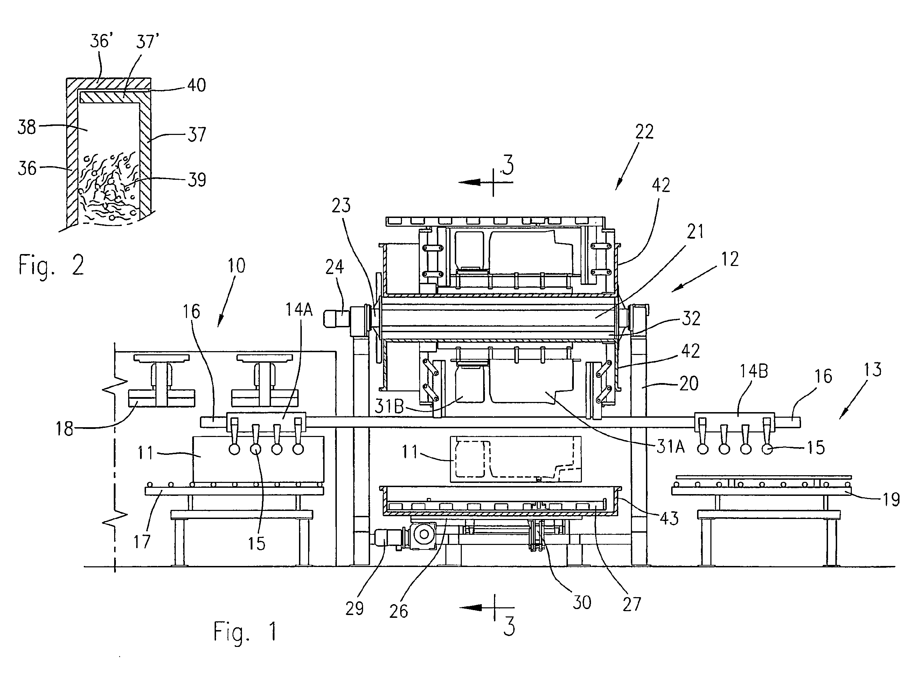

Fig. 1 shows an installation for foaming refrigerator cabinets, according to one possible embodiment of the invention.

As shown, a foaming installation comprises a preheating station 10 for the refrigerator cabinets 11, on a side of a foaming station 12, and an unloading station 13, on the opposite side from the foamed cabinets, can be moved towards a resting area for the final curing of the foam.

The refrigerator cabinets 11 can be transferred from the preheating station 10 to the foaming station 12, and from the latter to the unloading station 13 in any suitable way. For example, it is possible to use one or more motor-driven trolleys 14A, 14B provided with gripping means 15, for example a plurality of suction caps for grasping the cabinet 13 on both sides. The trolleys 14A and 14B are appropriately controlled to run along guide rails which extend longitudinally between the work stations.

The preheating stations 10 and unloading stations 13 can be of conventional type; for example, the preheating station 10 can be provided with roll tables 17 for supporting the individual cabinets 11 to be heated by one more heating units 18.

In turn, the unloading station 13 can comprise one or more roll tables 19 onto which the foamed cabinets from time to time may be transferred towards a resting area for the final curing of the foam, not shown.

The foaming station 12 comprises a frame 20 for supporting a rotary drum 21 onto which are secured two or more angularly spaced apart foaming jigs 22, two in the example shown.

In the case of fig. 1, the jig-holder drum 21 is supported by the structure 20 to rotate according to a horizontal axis 23 which extends in the longitudinal direction of the foaming station 12; however, other conformations and/or dispositions of the drum 21 and its rotational axis are not excluded.

First control means comprising a ratiomotor 24 which controls the selective step rotation of the drum 21, stopping it from time to time with one of the foaming jigs 22 facing downwards; a locking bolt (27') operated by a hydraulic or pneumatic cylinder engages the drum 21 to lock it in place.

In a position beneath the drum 21 is a movable table 26 upon which rests a support base element 27 designed to provide a thrust force against the rear wall of a refrigerator cabinet is shown.

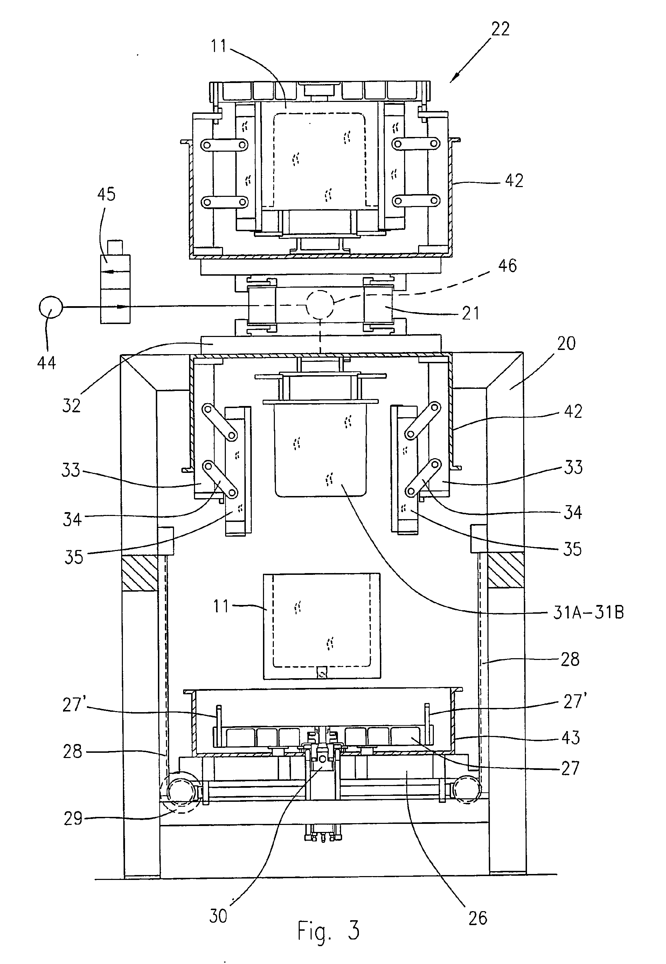

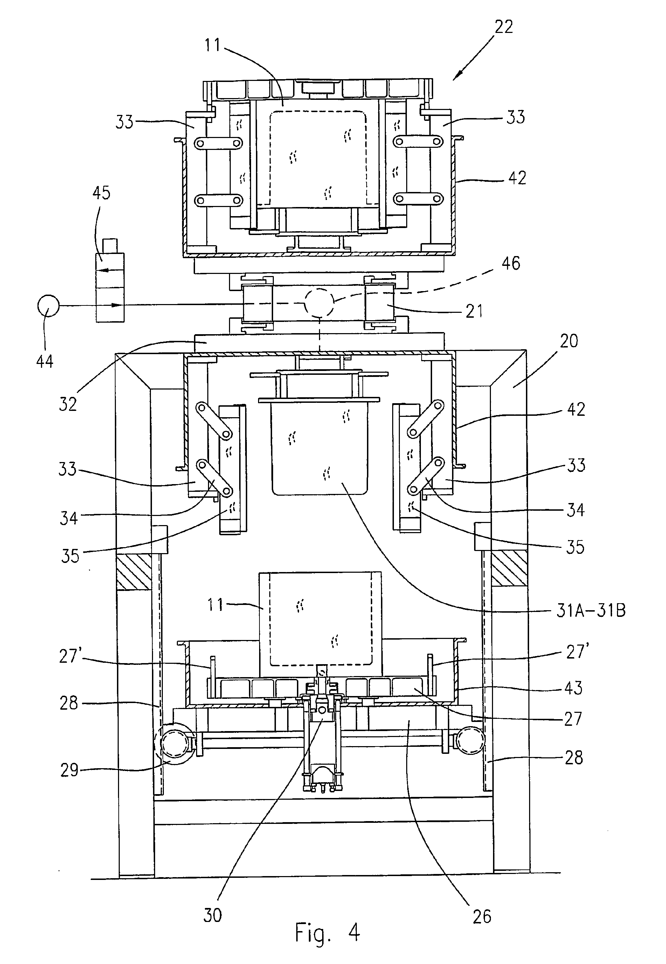

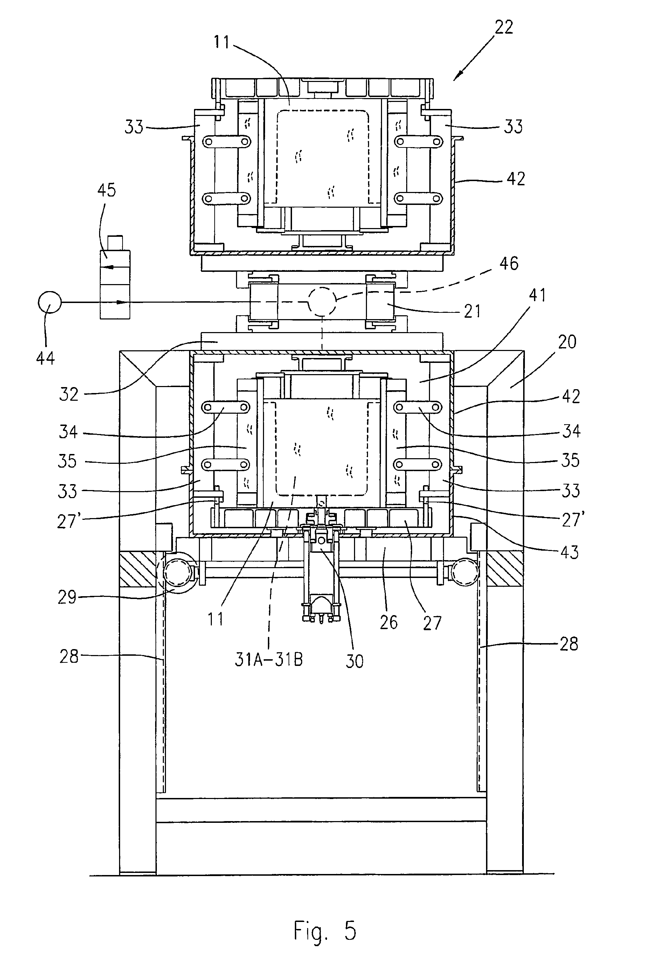

The support table 26 can be moved between a completely lowered position in an open condition of the foaming jig, shown in figures 1 and 3, and a completely raised position in which it closes the foaming jig, shown in fig. 5, passing through an intermediate position for transferring the refrigerator cabinets 11, shown in fig. 4, in which the trolleys 14A, 14B can lay down and respectively grip a refrigerator cabinet 11 from the base 27 on the support table 26.

The raising and lowering movements of the table 26 can be achieved in any way whatsoever, by means of suitable mechanical, electrical, hydraulic, pneumatic control means or their combination; for example, as shown, the table 26 can be moved vertically by means of a rack and pinion system 28 operated by an electric motor 29; lastly, reference 30 in the various figures has been used to indicate a mixing head for injecting a metered quantity of a reactive polyurethane mixture into the hollow walls of the refrigerator cabinets.

In the example shown, the jig-holder drum 21 has two opposite planar side faces for supporting a corresponding number of foaming jigs 22.

Each foaming jig 22 comprises a shaped plug 31A, 31 B, conformed to penetrate into a compartment or compartments of a refrigerator cabinet 11, and to come into contact with the internal surfaces of the cabinet walls.

The plug 31A, 31 B is interchangeably secured to a plate 32 in turn fastened to a side face of the rotary drum 21.

Extending from the plate 32 are columns 33 which, by means of connecting links 34, support peripheral platens 35 designed to come into contact, during the closure of the jig, with the external surfaces of the side walls of the refrigerator cabinet, to counteract the internal thrust of the foam undergoing expansion.

The jig-holder drum 21 is provided with a plurality of foaming jigs 22, two in the example under consideration; each jig 22 can be moved, by step rotation of the drum 21, to several angular positions, starting from a pre-established angular position, also referred to as starting or foaming position, in which the foaming jig is facing downwards, above the table 26 for loading and removing the cabinets, towards one or more subsequent angular positions for the curing of the foam, in which the already foamed refrigerator cabinets remain in their respective foaming jigs, and are cyclically moved to return to the starting position, where each cabinet which has completed the curing of the foam is removed from the support table and replaced with another cabinet to be foamed, which in the meantime has been pre-heated in the heating station 10.

A refrigerator cabinet, as schematically shown in the detail of fig. 2, is substantially composed of an external shell 36 and an internal shell 37 having folded edges 36' e 37' between which a hollow space 38 is formed into which a chemically reactive mixture is injected, for example a mixture based on a polyol and an isocyanate to form a polyurethane foam 39 capable of completely packing the hollow space 38 of the cabinet walls.

A gap 40 is provided between the two shells 36 and 37 in correspondence with the opposite folded edges 20' and 21', to vent the air during the expansion of the polyurethane foam, which make it impossible to generate a vacuum directly in the walls of the cabinet, by conventional foaming methods and jigs.

According to this invention, the vacuum foaming of a refrigerator cabinet can be carried out by cyclically enclosing each of the foaming jigs supported by the rotary drum, in a vacuum chamber 41 designed to be opened and tightly closed, in such a way as to allow the introduction and removal a refrigerator cabinet 13, in a given angular position corresponding to said foaming position in which each jig is facing downwards.

The vacuum chamber 41 can be made in any way whatsoever; in the form shown comprises an upper housing bell 42 for each foaming jig, and of a bottom closure cap 43, common to all the housing bells; each bell 42 is secured to the rotary drum 21, while the cap 43 is arranged on vertically movable table 26 to be moved between a lowered opening position and a raised closing position defining the vacuum chamber, as explained further on.

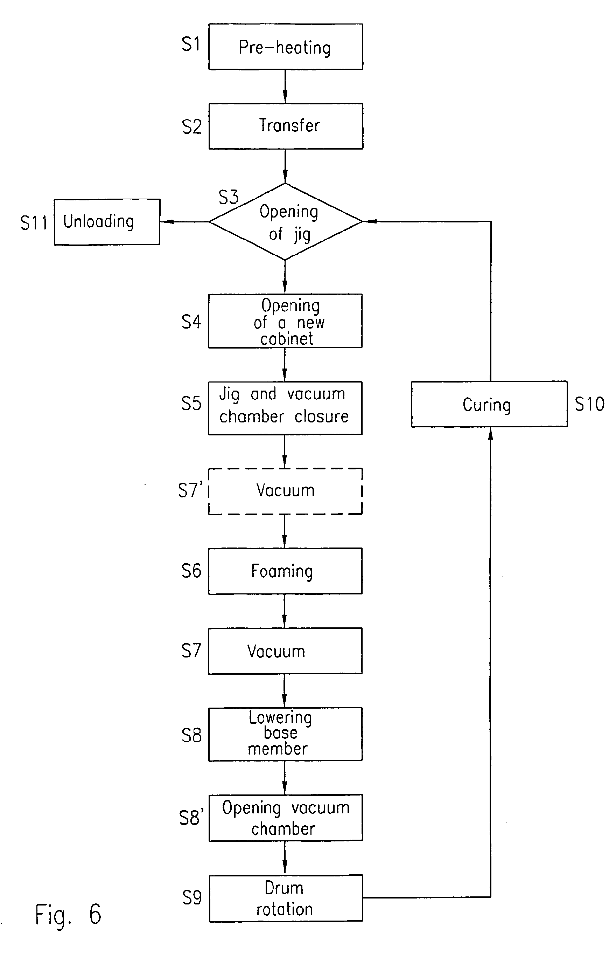

As previously mentioned, and as will be illustrated in greater detail with reference to the flow diagram of fig. 6, the injection and foaming steps of the polyurethane mixture take place under vacuum, by generating and maintaining a high vacuum degree in the vacuum chamber and consequently in the hollow space 38 between the external shell 36 and the internal shell 37 of a refrigerator cabinet.

In this connection, each foaming jig with the refrigerator cabinet 13 is enclosed in the vacuum chamber 41 formed by a housing bell 42 secured to the rotary drum 21, and the cap 43 secured to the movable table 26.

The peripheral walls of the bell 42 and of the cap 43 have peripheral edges appropriately shaped and/or provided with gaskets, to ensure the necessary sealing of the vacuum chamber 41; lastly, reference 44 in the various figures has been used to indicate a pump or vacuum source, selectively connectable to each bell 42 by means of a control valve 45 and a rotary distributor 46.

As an alternative, the connection to the vacuum source may be made through the cap 43.

The method for vacuum foaming of refrigerator cabinets, and the working operation of the installation, will be illustrated in greater detail hereunder with reference to the preceding figures and the flow diagram of fig. 6.

The refrigerator cabinets 11 to be foamed are initial introduced into the preheating oven 10, where they remain for a length of time necessary to bring them up to a given temperature (step S1), necessary for the subsequent foaming of the polyurethane mixture.

After a preheating step of the cabinet in the oven 10 (step S1), the cabinet 11 is removed and then transferred to the foaming station 12 by means of the trolley 14A (step S2).

The foaming jig 22 which at that time is downwardly oriented, is opened by disengaging the locking bolts (27') which hold the base element 27 secured to the peripheral walls 35 of the foaming jig (step S3)

In the meantime, the support table 26 has been raised to an intermediate position (fig. 4) to receive the base element 27 with a foamed cabinet which has first completed the foam hardening or running cycle, and which can therefore be transferred to the unloading station 13 by the trolley 14B (step S11), after the table 26 with the base element 27 has been completely lowered (fig. 3).

After the removal of an already foamed cabinet, the trolley 14A picking another preheated cabinet 11 from the roll table 17, depositing it on the base element 27 supported by the table 26, which in the meantime has been raised again to the intermediate cabinet unloading and receiving position of fig. 4 (step S4).

The jig 22 and the vacuum chamber 41 are then simultaneously closed (step S5), by completely raising the table 26; in fact, after the trolley 14A has moved backwards again into the oven 10, an electronic control unit which governs the operation of the entire installation, actuates the raising of the table 36 with the base element 27 and the new cabinet 11, to the upper position of fig. 5.

In these conditions, the plugs 31A, 31B are inside the cabinet 11, while the four peripheral platens 35 of the foaming jig, in a per se known way, are thrust against the external surfaces of the side walls of the cabinet 11.

Simultaneously, the base element 27 of the foaming jig which at that time is downwardly directed, is locked to the peripheral platens 35; the vacuum chamber 41 is in turn hermetically sealed in that the peripheral edges of the cap 43 have come into contact with the peripheral edges of the overlying bell 42.

At this point the chamber 41 can be connected to the vacuum source 44 (step S7') before feeding the polyurethane mixture into the hollow space 38 of the refrigerator cabinet walls (step S6); as an alternative, the vacuum in the chamber 41 can be generated simultaneously to the feeding of the polyurethane mixture, or immediately after (step S7); the choice of the moment the vacuum is created will depend upon specific processing requirements and may be determined each time by means of appropriate tests.

Upon completion of the feeding step of the polyurethane mixture, and after having reached the desired vacuum degree, the vacuum is maintained for a pre-established interval of time sufficient to allow the complete expansion of the foam and the correct filling or packing of the walls of the cabinet 11.

After the foaming of the new cabinet has been completed, and after the table 26 has been completely lowered (step S8), to open the vacuum chamber (step S8') the drum 21 is made to rotate by one step (step S9).

The rotation by one step of the drum 21 causes all the foaming jigs 22 to move forward, bringing a new jig, which has completed the hardening cycle and/or partial curing of the foam (step S10), into the foaming station 12 in which it is directed downwards, above the table 26 for supporting the bases 27 and the cabinets 11.

The cycle can then be started again from step S3, as described previously.

The proposed solution is consequently extremely advantageous in that, it makes possible to cyclically operate with a single processing line, under vacuum condition, with two or more foaming jigs of the same type, or of different types; in this way, not only is it possible to reduce the time length of the working cycle, but the curing step of the foam can be at least partially carried out in real time, inside the same foaming station, without having to stop the plant for the curing time of each cabinet on the rotating drum.

The use of vacuum, according to the method previously described, also permits the use of more highly reactive polyurethane mixtures, which helps to further reduce the processing times, and to find an appropriate balance between foaming speed and satisfactory distribution of the foam, which proves to be difficult to achieve with the conventional technologies.

Moreover, the productivity of the installation is considerably increased, maintaining investment and management costs comparatively lower compared to a conventional foaming installation.

It is understood however that what has been described and shown with reference to the drawings, has been given purely by way of example in order to illustrate the general features of the invention, and one of its preferential embodiments.

Therefore, other modifications or variations may be made to the entire installation, or part thereof, and to its operating mode, without thereby deviating from the scope of the accompanying claims.

## Claims

1. A method for vacuum foaming of refrigerator and/or freezer cabinets (11) having hollow walls, within a foaming jig (22), **characterised by** the steps of:
providing first and at least second foaming jigs (22) and respective jig-housing bells (42), on a rotary support drum (21), to sequentially move each jig (22) and bell (42) from a bottom position along a circular path;
feeding a chemically reactive foaming mixture into hollow walls of a cabinet (11), in the bottom position of the foaming jig (22);
closing the housing bell (42), by a bottom cap (43), to perform a vacuum chamber (41);
generating vacuum conditions within the vacuum chamber (41) and the foaming jig (22) in the bottom position of the circular path; and
sequentially positioning each foaming jig (22) and housing bell (42) in the bottom position to vacuum foam a new cabinet (11), while moving the foamed cabinets (11) along said circular path.

2. The method according to claim 1, **characterised in that** the vacuum generation is performed before the feeding of the foaming mixture into the cabinet walls.

3. The method according to claim 1, **characterised in that** the vacuum generation is performed at the feeding of the foaming mixture into the cabinet walls.

4. The method according to claim 1, **characterised in that** the vacuum generation is performed after the feeding of the foaming mixture into cabinet walls.

5. The method according to claim 1, **characterised in that** the foaming mixture is of highly reactive type.

6. The method according to claim 5, **characterised in that** the highly reactive mixture has a gel time less than 45 seconds, and a polymerization time less than 300 seconds.

7. The method according to claim 1, **characterised by** performing in the vacuum chamber (41), a vacuum degree in the range of 600 ÷ 900 millibars.

8. The method according to claim 1, **characterised in that** each foaming jig (22) with a foamed cabinet (11) is cyclically moved from the foaming position, through foam curing positions to return to said foaming position sequentially arranged along a circular path, by step rotation of the support drum (21).

9. The method according to claim 1, **characterised by** maintaining under pressure conditions in the vacuum chamber (41) and the foaming jig (22) during rising of the foam in the hollow walls of the cabinet (11).

10. An installation for vacuum foaming of hollow walls of refrigerator and/or freezer cabinets (11) into foaming jigs (22) **characterised by** comprising:
a rotatably supported jig-holder drum (21);
first and at least second foaming jigs (22) angularly spaced apart on the rotary drum (21), to move along a circular path;
jig-housing bells (42) secured to the jig-holder drum (21) to enclose respective foaming jigs (22);
a removable closure cap (43), to provide a vacuum chamber (41) in the bottom position of each jig-housing bell (42);
a vertically movable support table (26) beneath the rotary drum (21), for supporting a cabinet (11) and the closure cap (43);
first control means (24) being provided for step rotation of the drum (21), to sequentially dispose each housing bell (42) and a foaming jig (22) with a downwardly facing disposition, above the support table (26) and the closure cap (43);
second control means (29) to vertically move the support table (26) and the closure cap (43) between a lower and an upper position to open respectively to close the vacuum chamber (41) enclosing a foaming jig (22); and
control means (45, 46) to selectively connect the vacuum chamber (41) to a vacuum source (44).

11. The installation according to claim 10, **characterised in that** the jig-holder drum (21) is rotatably supported on horizontally arranged rotational shaft (23).

12. The installation according to claim 10, **characterised in that** the jig-holder drum (21) is provided between a cabinet heating station (10) and a foamed cabinet receiving station (13); and
trolley means (14) to move the cabinets (11) between the heating station (10) and the jig-holder drum (21), respectively between the latter (21) and the receiving station (13) for the foamed cabinets (11).

13. The installation according to claim 10, **characterised in that** the support table (26) is movable into an intermediate position, between said lower and upper positions, to allow deposition and removal of cabinets (11) by said trolley means (14).

## Patentansprüche

1. Verfahren zum Vakuumschäumen von Kühlschrank- und/oder Gefriertruhengehäusen (11) mit hohlen Wänden, innerhalb einer Aufschäumeinspannvorrichtung (22), **gekennzeichnet durch** die Schritte:
Bereitstellung erster und zumindest zweiter Aufschäumeinspannvorrichtungen (22) und entsprechender Spannvorrichtungsgehäuseglocken (42), auf einer rotierenden Stütztrommel (21), zur sequenziellen Bewegung jeder Einspannvorrichtung (22) und
Glocke (42) von einer unteren Position entlang einer Kreisbahn;
Zuführen einer chemisch-reaktiven Aufschäummischung in hohle Wände eines Gehäuses (11), in der unteren Position der Aufschäumeinspannvorrichtung (22);
Verschließen der Gehäuseglocke (42) mittels einer unteren Haube (43), um eine Vakuumkammer (41) zu bilden;
Erzeugen von Vakuumbedingungen innerhalb der Vakuumkammer (41) und der Aufschäumeinspannvorrichtung (22) in der unteren Position der Kreisbahn; und
der Reihe nach Positionierung jeder Aufschäumeinspannvorrichtung (22) und Gehäuseglocke (42) in der unteren Position zum Vakuumschäumen eines neuen Gehäuses (11), während des Bewegens eines aufgeschäumten Gehäuses (11) entlang der besagten Kreisbahn.

2. Verfahren nach Anspruch 1, **dadurch gekennzeichnet, dass** die Vakuumerzeugung vor der Zuführung der Aufschäummischung in die Gehäusewände durchgeführt wird.

3. Verfahren nach Anspruch 1, **dadurch gekennzeichnet, dass** die Vakuumerzeugung bei der Zuführung der Aufschäummischung in die Gehäusewände durchgeführt wird.

4. Verfahren nach Anspruch 1, **dadurch gekennzeichnet, dass** die Vakuumerzeugung nach der Zuführung der Aufschäummischung in die Gehäusewände durchgeführt wird.

5. Verfahren nach Anspruch 1, **dadurch gekennzeichnet, dass** die Aufschäummischung von hochreaktiver Art ist.

6. Verfahren nach Anspruch 5, **dadurch gekennzeichnet, dass** die hochreaktive Mischung eine Gelierzeit von weniger als 45 Sekunden und eine Polymerisationszeit von weniger als 300 Sekunden aufweist.

7. Verfahren nach Anspruch 1, **gekennzeichnet durch** das Vollziehen eines Vakuumgrades im Bereich von 600 bis 900 Millibar in der Vakuumkammer (41).

8. Verfahren nach Anspruch 1, **dadurch gekennzeichnet, dass** jede Aufschäumeinspannvorrichtung (22) mit einem aufgeschäumten Gehäuse (11) von der Aufschäumposition durch Schaumaushärtepositionen bewegt wird, um durch Schrittdrehung der Stütztrommel (21) zur besagten Aufschäumposition zurückzukehren, welche sequenziell entlang einer Kreisbahn angeordnet ist.

9. Verfahren nach Anspruch 1, **gekennzeichnet durch** Beibehalten unter Druckbedingungen in der Vakuumkammer (41) und der Aufschäumeinspannvorrichtung (22), während des Ansteigens von Schaum in den hohlen Wänden des Gehäuses (11).

10. Vorrichtung zum Vakuumschäumen hohler Wände von Kühlschrank- und/oder Gefriertruhengehäusen (11) in Aufschäumeinspannvorrichtungen (22), **gekennzeichnet durch** Umfassen:
eine drehbare gelagerte Spannvorrichtungshaltertrommel (21);
erste und zumindest zweite Aufschäumeinspannvorrichtungen (22), welche voneinander winkelig auf der drehbaren Trommel (21) beabstandet sind, um sich entlang einer Kreisbahn zu bewegen;
Spannvorrichtungsgehäuseglocken (42), die an der Spannvorrichtungshaltertrommel (21) befestigt sind, um die entsprechenden Aufschäumeinspannvorrichtungen (22) zu umgeben;
eine entfernbare Verschlusshaube (43) zum Bilden einer Vakuumkammer (41) in der unteren Position jeder Spannvorrichtungsgehäuseglocke (42);
ein vertikal beweglicher Trägertisch (26) unterhalb der Drehtrommel (21) zum Tragen eines Gehäuses (11) und der Verschlusshaube (43);
erste Steuermittel (24), die zur Schrittdrehung der Trommel (21) zur Verfügung gestellt sind, um jede Gehäuseglocke (42) und eine Aufschäumeinspannvorrichtung (22) mit einer nach unten gerichteten Aufstellung anzuordnen, oberhalb des Trägertisches (26) und der Verschlusshaube (43);
zweite Steuermittel (29) zum vertikalen Bewegen des Trägertischs (26) und der Verschlusskappe (43) zwischen einer unteren und einer oberen Position zum Öffnen bzw. zum Schließen der eine Aufschäumeinspannvorrichtung (22) einschließenden Vakuumkammer (41); und
Steuermittel (45, 46) zum wählbaren Verbinden der Vakuumkammer (41) mit einer Vakuumquelle (44).

11. Vorrichtung nach Anspruch 10, **dadurch gekennzeichnet, dass** die Spannvorrichtungshaltertrommel (21) drehbar auf einer horizontal angeordneten Drehwelle (23) gelagert ist.

12. Vorrichtung nach Anspruch 10, **dadurch gekennzeichnet, dass** die Spannvorrichtungshaltertrommel (21) zwischen einer Gehäuseheizstation (10) und einer Aufnahmestation der geschäumten Gehäuse (13) vorgesehen ist; und Fördermittel (14) zum Bewegen der Gehäuse (11) zwischen der Heizstation (10) und der Spannvorrichtungshaltertrommel (21), bzw. zwischen letzterer (21) und der Aufnahmestation (13) für die aufgeschäumten Gehäuse (11).

13. Vorrichtung nach Anspruch 10, **dadurch gekennzeichnet, dass** der Trägertisch (26) in eine Zwischenposition zwischen den besagten unteren und oberen Positionen bewegbar ist, um die Anordnung und Entfernung der Gehäuse (11) durch die besagten Fördermittel (14) zu erlauben.

## Revendications

1. Procédé de moussage sous vide de carrosseries de réfrigérateurs et/ou de congélateurs (11) ayant des parois creuses, à l'intérieur d'un bâti de moussage (22), **caractérisé par** les étapes consistant à :
prendre un premier et au moins un deuxième bâti de moussage (22) et des cloches de logement de bâti (42), sur un tambour de support rotatif (21), pour déplacer en séquence chaque ensemble bâti (22) et cloche (42) depuis une position inférieure le long d'un chemin circulaire ;
introduire un mélange de moussage chimiquement réactif dans les parois creuses d'une carrosserie (11), dans la position inférieure du bâti de moussage (22) ;
fermer la cloche de logement (42), au moyen d'un couvercle inférieur (43), pour former une chambre à vide (41) ;
générer des conditions de vide dans la chambre à vide (41) et dans le bâti de moussage (22) dans la position inférieure du chemin circulaire ; et
positionner séquentiellement chaque bâti de moussage (22) et cloche de logement (42) dans la position inférieure pour mousser sous vide une nouvelle carrosserie (11), tout en déplaçant les carrosseries moussées (11) le long dudit chemin circulaire.

2. Procédé selon la revendication 1, **caractérisé en ce que** la production de vide est effectuée avant l'introduction du mélange de moussage dans les parois de la carrosserie.

3. Procédé selon la revendication 1, **caractérisé en ce que** la production de vide est effectuée au moment de l'introduction du mélange de moussage dans les parois de la carrosserie.

4. Procédé selon la revendication 1, **caractérisé en ce que** la production de vide est effectuée après l'introduction du mélange de moussage dans les parois de la carrosserie.

5. Procédé selon la revendication 1, **caractérisé en ce que** le mélange de moussage est de type hautement réactif.

6. Procédé selon la revendication 5, **caractérisé en ce que** le mélange hautement réactif a un temps de gel inférieur à 45 secondes, et un temps de polymérisation inférieur à 300 secondes.

7. Procédé selon la revendication 1, **caractérisé par** le fait de réaliser dans la chambre à vide (41), un degré de vide compris dans l'intervalle de 600 à 900 millibars.

8. Procédé selon la revendication 1, **caractérisé en ce que** chaque bâti de moussage (22) avec une carrosserie moussée (11) est déplacé cycliquement de la position de moussage vers des positions de durcissement de mousse pour revenir à ladite position de moussage agencées séquentiellement le long d'un chemin circulaire, par une rotation pas à pas du tambour de support (21).

9. Procédé selon la revendication 1, **caractérisé par** le fait de maintenir dans des conditions de pression la chambre à vide (41) et le bâti de moussage (22), au cours de la montée de la mousse dans les parois creuses de la carrosserie (11).

10. Installation pour le moussage sous vide des parois creuses de carrosseries de réfrigérateurs et/ou de congélateurs (11), dans des bâtis de moussage (22), **caractérisé en ce qu'**elle comprend :
un tambour porte-bâti supporté à rotation (21) ;
un premier et au moins un deuxième bâti de moussage (22) espacés angulairement sur le tambour rotatif (21), destinés à se déplacer le long d'un chemin circulaire ;
des cloches de logement de bâti (42) fixées au tambour porte-bâti (21) pour enfermer des bâtis de moussage (22) respectifs ;
un couvercle de fermeture amovible (43), pour former une chambre à vide (41) dans la position inférieure de chaque cloche de logement de bâti (42) ;
une table de support mobile verticalement (26) sous le tambour rotatif (21), pour supporter une carrosserie (11) et le couvercle de fermeture (43) ;
un premier moyen de commande (24) étant prévu pour la rotation pas à pas du tambour (21), pour disposer en séquence chaque cloche de logement (42) et un bâti de moussage (22) avec une disposition orientée vers le bas, au-dessus de la table de support (26) et du couvercle de fermeture (43) ;
un deuxième moyen de commande (29) pour déplacer verticalement la table de support (26) et le couvercle de fermeture (43) entre une position inférieure et une position supérieure pour respectivement ouvrir et fermer la chambre à vide (41) renfermant un bâti de moussage (22) ; et
un moyen de commande (45, 46) pour connecter sélectivement la chambre à vide (41) à une source de vide (44).

11. Installation selon la revendication 10, **caractérisée en ce que** le tambour porte-bâti (21) est supporté à rotation sur un arbre de rotation disposé horizontalement (23).

12. Installation selon la revendication 10, **caractérisée en ce que** le tambour porte-bâti (21) est placé entre un poste de chauffage (10) de carrosserie et un poste de réception (13) de carrosserie moussée ; et
un moyen formant chariot (14) pour déplacer les carrosseries (11) entre le poste de chauffage (10) et le tambour porte-bâti (21), respectivement entre ce dernier (21) et le poste de réception (13) pour les carrosseries moussées (11).

13. Installation selon la revendication 10, **caractérisée en ce que** la table de support (26) peut être déplacée jusqu'à une position intermédiaire, entre lesdites positions supérieure et inférieure, pour permettre le dépôt et le retrait de carrosseries (11) par ledit moyen formant chariot (14).
